# EUROPÄISCHE PATENTSCHRIFT

(11) **EP 2 054 275 B1**
(45) Veröffentlichungstag und Bekanntmachung des Hinweises auf die Patenterteilung: **14.11.2012**
(21) Anmeldenummer: 07788462.5
(22) Anmeldetag: 16.08.2007
(51) Int. Cl.: B60R 22/30, B60R 21/015

(54) **GURTKRAFT-MESSEINRICHTUNG**
BELT FORCE MEASURING DEVICE
DISPOSITIF DE MESURE DE LA FORCE DE CEINTURE

(30) Priorität: 17.08.2006 DE 102006038594
(43) Veröffentlichungstag der Anmeldung: 06.05.2009
(73) Patentinhaber: Continental Automotive GmbH, 30165 Hannover (DE)
(72) Erfinder: SKARPIL, Harry, 44388 Dortmund (DE)
(86) Internationale Anmeldenummer: PCT/EP2007/058538
(87) Internationale Veröffentlichungsnummer: WO 2008/020061

(56) Entgegenhaltungen:
- DE-A1- 10 322 700
- DE-A1- 10 338 057

## Beschreibung

Die Erfindung betrifft eine Gurtkraftmesseinrichtung mit einer Messfeder, deren Auslenkung ein Maß für die Gurtkraft ist, und mit einem Geber, der der Messfeder zugeordnet ist, und mit einem Sensorelement, das ebenfalls der Messfeder zugeordnet ist, wobei die Auslenkung der Messfeder eine Veränderung der Lage des Sensorelementes relativ zum Geber bewirkt, die vom Sensorelement als Maß für die Gurtkraft erfasst wird und wobei die Gurtkraftmesseinrichtung weiterhin ein erstes Verbindungselement aufweist, das die Messfeder mit einem Gurtschloss oder einem ersten Gurtabschnitt verbindet und ein zweites Verbindungselement, das die Messfeder mit einer Fahrzeugkarosserie beziehungsweise einen Bauteil an der Fahrzeugkarosserie oder einem zweiten Gurtabschnitt verbindet.

Für einen verbesserten Insassenschutz in einem Fahrzeug ist es erforderlich die Kraft zu messen, die eine angeschnallte Person auf den Gurt überträgt. Diese Kraft wird Gurtkraft genannt. Die Messwerte der Gurtkraft werden verarbeitet und zum Beispiel während eines Unfalls zur Berechnung der optimalen Zündung von Gurtstraffern und Airbags eingesetzt.

Die US 6,230,088 B1 offenbart ein Gurtschlossgehäuse, das über eine Gurtkraftmesseinrichtung mit einer Verankerung verbunden ist, die an der Karosserie eines Fahrzeugs befestigt ist. Die Gurtkraftmesseinrichtung umfasst ein erstes Teil, das mit dem Gurtschloss gekoppelt ist und an dem ein als Magnet ausgebildeter Geber angeordnet ist. Ferner ist ein zweites Teil vorgesehen, welches mit der Verankerung gekoppelt ist. An dem zweiten Teil ist ein Sensorelement angeordnet, das als GMR-Sensor ausgebildet ist. Das erste und zweite Teil sind über zwei Federn, die jeweils frei aufliegen, miteinander gekoppelt. Durch die Gurtkraft wird eine Verformung der Messfeder hervorgerufen, so dass sich der Abstand zwischen dem Geber und dem Sensorelement ändert, was als Messsignal zur Bestimmung der Gurtkraft ausgewertet wird.

Auch aus der DE 102 43 344 B4 ist eine Gurtkraftmesseinrichtung mit einer Messfeder, deren Dehnung als Maß für die Gurtkraft genutzt wird, bekannt. Ein Gurtschlossgehäuse, das über die Gurtkraftmesseinrichtung mit einer Verankerung verbunden ist, ist an der Karosserie eines Fahrzeugs befestigt. Die Gurtkraftmesseinrichtung umfasst ein erstes separates Verbindungselement, das mit dem Gurtschloss gekoppelt ist und ein zweites separates Verbindungselement, welches mit der Verankerung gekoppelt ist. Die Verbindungselemente sind über die Messfeder miteinander gekoppelt. Die Gurtkraftmesseinrichtung weist ferner einen Geber auf, der an der Messfeder starr zu einer ersten Lagerung der Messfeder angeordnet ist und ein Sensorelement, das an der Messfeder starr zu einer zweiten Lagerung der Messfeder angeordnet ist. Die Messfeder ist so angeordnet und ausgebildet, dass sie sich zwischen der ersten und zweiten Lagerung abhängig von der Gurtkraft ausdehnt. DE 103 38057 beschreibt ebenfalls eine Guntkraftmesseinrichtung nach dem Oberbegriff des Anspruchs 1.

Derartige Gurtkraftmesseinrichtungen haben den Nachteil, dass sie aus einer Vielzahl von einzelnen Komponenten bestehen, die nur mit einem relativ hohen Aufwand miteinander verbunden werden können.

Die Aufgabe der Erfindung ist es, eine Gurtkraftmesseinrichtung zu schaffen, welche einfach und kostengünstig herzustellen ist.

Die Aufgabe wird durch die Merkmale des unabhängigen Patentanspruchs gelöst. Vorteilhafte Ausgestaltungen der Erfindung sind in den Unteransprüchen gekennzeichnet.

Wenn die Messfeder, das erste Verbindungselement und das zweite Verbindungselement einstückig ausgebildet sind, erübrigt sich ein Zusammenbau dieser Teile. Die Gurtkraftmesseinrichtung lässt sich so sehr kostengünstig und schnell herstellen.

Bei der Erfindung sind die Messfeder, das erste Verbindungselement und das zweite Verbindungselement einstückig als Stanzblechteil ausgebildet. Stanzblechteile sind sehr einfach und preiswert in großen Stückzahlen herstellbar.

Bei der Erfindung weist das Stanzblechteil mindestens eine erste Faltung auf. Mit der Faltung wird das Anschlagselement in eine Position vor dem Anschlag gebracht. Die ist notwendig, um im Überlastfall ein Zerreißen der Messfeder zu verhindern.

Bei einer Ausgestaltung weist das erste Verbindungselement eine Lasche auf. Die Lasche dient zur Verbindung des Verbindungselementes mit einem Gurtschloss, einem Gurtabschnitt oder der Fahrzugkarosserie. Auch wenn das zweite Verbindungselement eine Lasche aufweist, können derartige Verbindungen leicht hergestellt werden.

Bei der Erfindung ist am Stanzblechteil durch mindestens eine zweite Faltung ein Anschlag ausgebildet, der beim Erreichen einer Maximalkraft die weitere Verschiebung der Verbindungselemente untereinander verhindert. Durch diese Maßnahme wird die Messfeder beim Erreichen der Maximalkraft nicht weiter belastet und die Gurtkraftmesseinrichtung nimmt die volle Gurtkraft auf, ohne weiter nachzugeben.

Bei einer nächsten Ausgestaltung ist am Stanzblechteil durch eine nächste Faltung eine Führung ausgebildet, die eine geführte Verschiebung der Verbindungselemente untereinander ermöglicht. Durch die Führung wird eine sehr exakte Bewegung des Sensorelementes relativ zum Geber ermöglicht, was zu sehr guten Messergebnissen der Gurtkraft führt.

Sehr vorteilhaft ist es, wenn das Stanzblechteil als Leadframe ausgebildet ist, auf dem das Sensorelement und/oder eine Auswerteelektronik angeordnet sind. Hierdurch wird eine separate Verkabelungen des Sensorelementes und der Auswerteelektronik unnötig. Der Leadframe trägt das Sensorelement und die Auswerteelektronik und er ist ebenfalls zur Signal und Stromführung verwendbar.

Darüber hinaus ist es sehr vorteilhaft, wenn das Stanzblechteil mit dem darauf angeordneten Sensorelement, dem Geber und/oder der Auswerteelektronik mit einem Thermoplast zum Schutz vor äußeren Einflüssen umspritzt ist. Thermoplaste lassen sich sehr kostengünstig verarbeiten und sie bieten einen hochwertigen und langlebigen Schutz vor äußeren Einflüssen, wie Schmutz, Feuchtigkeit und mechanischen Belastungen.

Ausführungsbeispiele der Erfindung werden im Folgenden anhand der schematischen Zeichnung erläutert. Es zeigen:
- Figur 1: einen Fahrzeugsitz mit einem Sicherheitsgurt,
- Figur 2: eine Gurtkraftmesseinrichtung nach dem Stand der Technik,
- Figur 3: die Gurtkraftmesseinrichtung in ihrer ungefalteten Form als Standsblechteil,
- Figur 4: die aus Figur 3 bekannte Gurtkraftmesseinrichtung in ihrem gefalteten Zustand,
- Figur 5: die aus Figur 4 bekannte Gurtkraftmesseinrichtung mit ihrer Messfeder und dem ersten Verbindungselement sowie dem zweiten Verbindungselement,
- Figur 6: die aus Figur 5 bekannte Gurtkraftmesseinrichtung ergänzt um ein Sensorgehäuse und
- Figur 7: die aus Figur 6 bekannte Gurtkraftmesseinrichtung mit einer Umspritzung 23 aus thermoplastischem Material.

Elemente gleicher Konstruktion und Funktion sind figurenübergreifend mit den gleichen Bezugszeichen versehen.

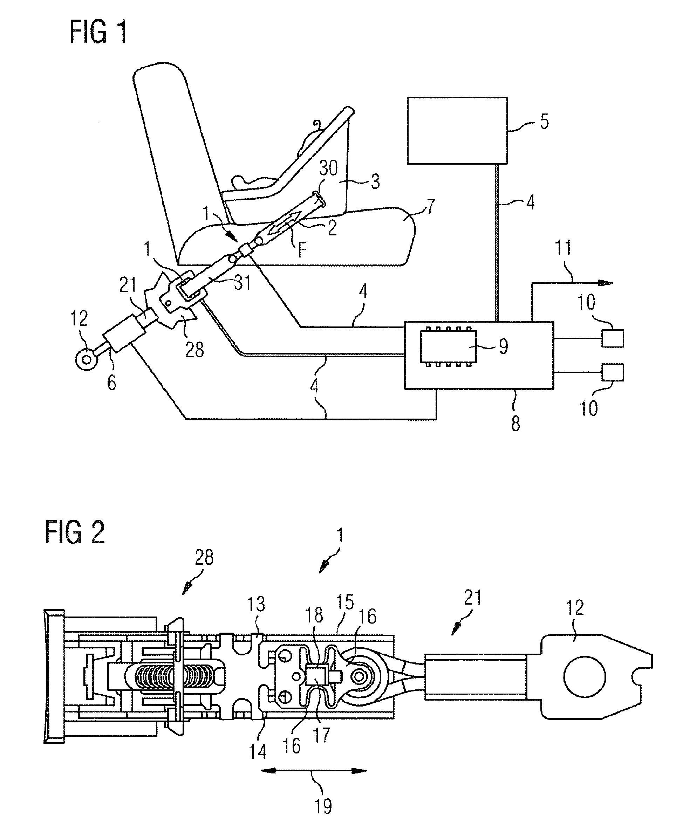

Figur 1 zeigt einen Fahrzeugsitz 7 mit einem Sicherheitsgurt 2, im Folgenden kurz Gurt 2 genannt, wie er üblicherweise in Personenkraftwagen aber auch Lastkraftwagen und Omnibussen verwendet wird. Darüber hinaus finden sich derartige Fahrzeugsitze 7 auch in schienengebundenen Fahrzeugen, Flugzeugen und schnellen Wasserfahrzeugen. Die erfindungsgemäße Gurtkraftmesseinrichtung 1 kann in all diesen Fahrzeugen eingesetzt werden. Figur 1 zeigt einen Kindersitz 3 auf dem Fahrzeugsitz 7, der mit dem Gurt 2 gesichert ist. Anstelle des Kindersitzes 3 ist es natürlich auch denkbar, dass eine erwachsene Person mit dem Gurt 2 auf dem Sitz 7 gesichert ist. Bei einem Verkehrsunfall entstehen erhebliche Beschleunigungen, die vom Gurt 2 abgefangen werden müssen, wobei der Gurt 2 unter Volllast bis zu 20 KN aufnehmen muss. Um den angeschnallten Fahrzeuginsassen maximal zu schonen und dabei Systeme wie den Airbag 5 oder die Gurtstraffer 6 optimal steuern zu können, ist im Gurtschloss 28 eine Gurtkraftmesseinrichtung 1 ausgebildet.

Darüber hinaus erkennt man am Gurtschloss 28 ein zweites mechanisches Verbindungselement 21, dass das eine im Gurtschloss 28 angeordnete Messfeder 16 mit dem Gurtstraffer 6 verbindet. Der Gurtstraffer 6 wiederum ist mittels eines weiteren mechanischen Verankerungselementes 12 fest mit der Karosserie des hier nicht dargestellten Kraftfahrzeuges verbunden. Die Gurtkraftmesseinrichtung 1 erkennt bei einem Unfall des Fahrzeuges die auf den Gurt 2 einwirkende Kraft F und sie gibt die Information über die einwirkende Kraft F über die elektrische Leitung 4 an das Steuergerät 8 weiter. Im Steuergerät 8 befindet sich ein Mikrocontroller 9, der anhand der ermittelten Gurtkraft F und eventuell zusätzlichen Informationen von weiteren Sensoren 10 den optimalen Auslösezeitpunkt des Airbags 5 bestimmt und die Gurtstraffer 6 ansteuert. Über eine elektrische Verbindung 11 zur weiteren hier nicht dargestellten Fahrzeugelektronik können die vorhandenen Informationen zur Steuerung weiterer Fahrzeugkomponenten verwendet werden.

Darüber hinaus wird in Figur 1 gezeigt, dass die erfindungsgemäße Gurtkraftmesseinrichtung 1 auch zwischen einem ersten Gurtabschnitt 30 und einem zweiten Gurtabschnitt 31 im Verlauf des Gurtes 2 platziert sein kann.

Figur 2 zeigt eine Gurtkraftmesseinrichtung 1 nach dem Stand der Technik. Die Gurtkraftmesseinrichtung 1 ist in einem Gurtschloss 28 integriert. Zu erkennen ist zunächst ein Gehäuse 15 des Gurtschlosses 28, in dem eine Messfeder 16 angeordnet ist. Die Messfeder 16 ist hier als metallische Feder ausgebildet und über ein Verbindungselement 21 und das Verankerungselement 12 mit der hier nicht dargestellte Fahrzeugkarosserie verbunden. Der Messfeder 16 ist ein Sensorelement 17 und ein Geber 18 zugeordnet. Das Sensorelement 17 ist in der Regel als Hallsensor oder magnetoresistiver Sensor ausgebildet. Es kann jedoch jedes ein Geberfeld erfassende Sensorelement verwendet werden. Der Geber 18 ist hier als Permanentmagnet ausgebildet. Andere felderzeugende Geber sind jedoch ebenso gut einsetzbar. Die hier verwendbaren Sensorelemente 17 und Geber 18 können ebenfalls in den in den Figuren 1 und 3 bis 7 beschriebenen Gurtkraftmesseinrichtungen 1 verwendet werden.

Das Sensorelement 17 und der Geber 18 sind an verschiedenen Stellen mit der Messfeder 16 verbunden. Bei einer Krafteinwirkung auf die Gurtkraftmesseinrichtung 1 verformt sich die Messfeder 16 und dadurch kommt es zu einer Relativverschiebung zwischen dem Sensorelement 17 und dem Geber 18, die durch das Sensorelement 17 erfasst wird und in ein elektrisches Signal umgewandelt wird. Die Dehnung 19 der Messfeder 16 ist proportional zu der auf den Gurt 2 wirkenden Kraft F. Damit ist das vom Sensorelement 17 erfasste Signal proportional zur Gurtkraft F und es kann direkt genutzt werden, um mit Hilfe des Steuergerätes 8 den Airbag 5 und die Gurtstraffer 6 zu steuern.

Weiterhin zeigt Figur 2 ein erstes Verbindungselement 13, das die Messfeder 16 mit dem Gurtschloss 28 verbindet und das unter der Einwirkung der Gurtkraft F gegen einen Anschlag 14 bewegt wird, wenn die Dehnung 19 der Messfeder 16 ihr Maximum erreicht hat. Beim Überschreiten einer gewissen Maximalkraft ist es nicht mehr sinnvoll, die Gurtkraft F zu bestimmen, da bis dahin ohnehin die Auslösung der Insassenschutzsysteme, wie Airbag 5 und Gurtstraffer 6, erfolgt sein muss, um die Fahrzeuginsassen zu schützen. Ab dieser Maximalkraft kommt es nur noch darauf an, dass der Gurt 2 den Fahrzeuginsassen sicher zurückhält. Bis zum Erreichen dieser Maximalkraft ist es jedoch äußerst sinnvoll, die Gurtkraft F zu messen, um den Fahrzeuginsassen optimal schützen zu können. Beim Erreichen der Maximalkraft stützt sich das erste Verbindungselement 13 am Anschlag 14 ab, wodurch die Messfeder 16 nicht weiter ausgedehnt werden kann. Die erfindungsgemäße Gurtkraftmesseinrichtung 1 wird in den nachfolgenden Figuren näher beschrieben.

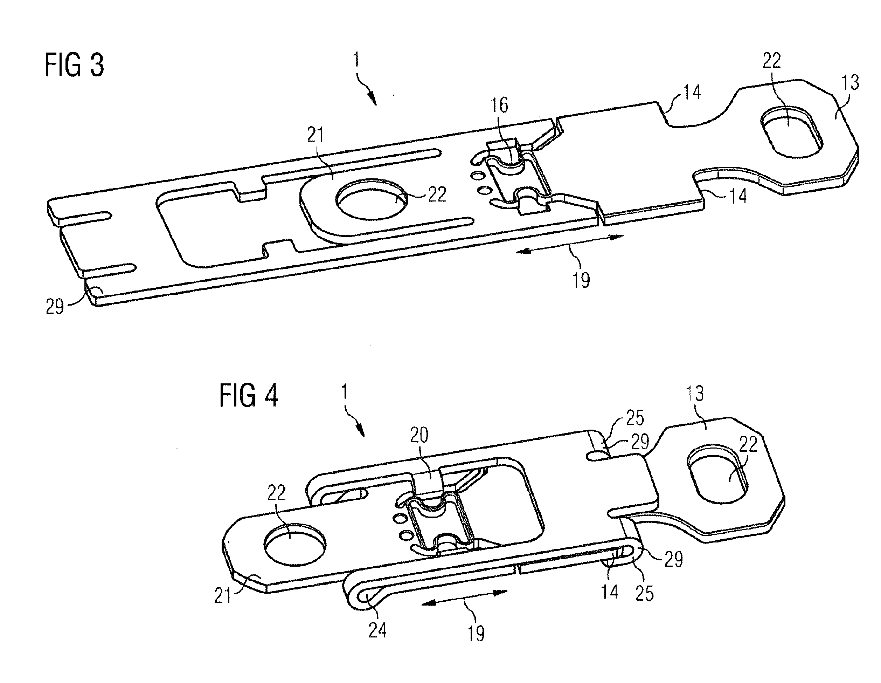

Figur 3 zeigt die Gurtkraftmesseinrichtung 1 in ihrer ungefalteten Form als Stanzblechteil. Im zentralen Bereich der Gurtkraftmesseinrichtung 1 ist die Messfeder 16 zu erkennen. Die Messfeder 16 verformt sich unter der Gurtkraft F, die vom ersten Verbindungselement 13 über die Messfeder 16 zum zweiten Verbindungselement 21 geleitet wird. Das erste Verbindungselement 13 und das zweite Verbindungselement 21 weisen jeweils eine Lasche 22 auf, mit der die Verbindungselemente 13, 21 z. B. mit dem ersten Gurtabschnitt 30 und dem zweiten Gurtabschnitt 31 verbunden werden können. Natürlich ist es auch möglich, beispielsweise das erste Verbindungselement 13 mit einer hier nicht dargestellten Fahrzeugkarosserie zu verbinden und das zweite Verbindungselement 21 mit dem aus Figur 2 bekannten Gurtschloss 28 zu verbinden. Die Dehnung 19 der Messfeder 16 wird durch den Dehnungspfeil angedeutet. Darüber hinaus zeigt Figur 3 einen Anschlag 14, sowie Anschlagselemente 29, deren Funktion in Figur 4 erklärt wird. Deutlich ist in Figur 3 zu erkennen, dass die Messfeder 16, das erste Verbindungselement 13 und das zweite Verbindungselement 21 einstückig aus einem Stanzblechteil gebildet sind. Das Stanzblechteil ist sehr einfach und kostengünstig herstellbar.

Figur 4 zeigt die aus Figur 3 bekannte Gurtkraftmesseinrichtung 1 in ihrem gefalteten Zustand. Hierzu wurde das aus Figur 3 bekannte, flache Stanzblechteil zweimal gefaltet. Eine erste Faltung 24 und eine zweite Faltung 25 positionieren die Anschlagselemente 29 in entsprechendem Abstand zum Anschlag 14. Zwischen dem Anschlag 14 und den Anschlagselementen 29 ist ein Raum ausgespart, der dem Dehnungsgang der Messfeder 16 entspricht. Wird nun über das erste Verbindungselement 13 und das zweite Verbindungselement 21 eine Kraft F auf die Messfeder 16 ausgeübt, so verformt sich diese solange, bis das Anschlagselement 29 auf den Anschlag 14 trifft und somit die weitere Verformung der Messfeder 16 verhindert. Das Gesamtsystem ist derart ausgebildet, dass die Messfeder 16 bis zum Erreichen des Anschlags 14 durch die Anschlagelemente 19 ihre maximale Dehnung 19 erfahren hat. Nach dem Überschreiten dieser Maximalkraft ist es nicht sinnvoll, eine weitere Gurtkraftmessung zu betreiben. Daher hält das Anschlagselement 29 am Anschlag 14 die Gurtkraftmesseinrichtung in einer nicht weiter veränderlichen Position.

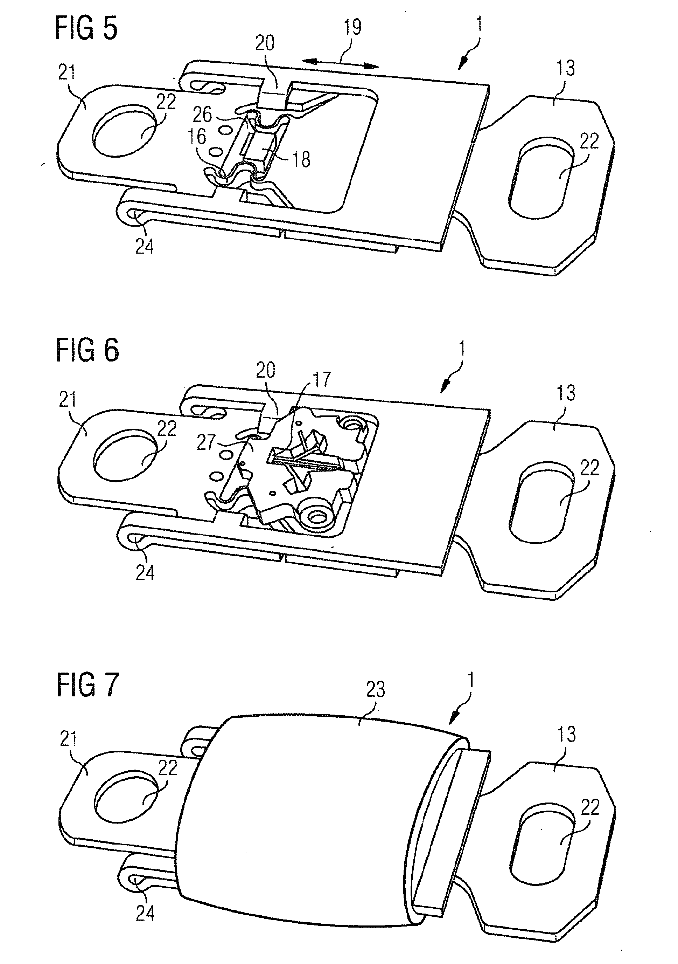

Aus Figur 3 und Figur 4 ist gut zu erkennen, dass die gesamte Gurtkraftmesseinrichtung mit ihrer Messfeder 16 und dem ersten Verbindungselement 13 und dem zweiten Verbindungselement 21 einstückig ausgebildet ist und durch einen relativ einfachen Faltungsprozess zu einer Gurtkraftmesseinrichtung 1 komplettiert werden kann. Eine derartige Ausbildung der Gurtkraftmesseinrichtung 1 bewirkt einen sehr einfachen Herstellungsprozess und damit sehr geringe Herstellungskosten. Ein Zusammenbau der Gurtkraftmesseinrichtung 1 aus einer einzelnen Messfeder 16 und einem ersten Verbindungselement 13 und einem zweiten Verbindungselement 21 ist hier nicht notwendig. Die Komplettierung der in Figur 3 und Figur 4 gezeigten Gurtkraftmesseinrichtung mit einem Sensorelement 17 und einem Geber 18 wird in den Figuren 5 und 6 dargestellt.

Figur 5 zeigt die aus Figur 4 bekannte Gurtkraftmesseinrichtung 1 mit ihrer Messfeder 16 und dem ersten Verbindungselement 13 sowie dem zweiten Verbindungselement 21. Weiterhin ist die erste Faltung 24 zu erkennen. Die zweite Faltung 25 ist hier nicht dargestellt, sie kann aber analog zur Figur 4 ausgeführt sein. In der Messfeder 16 ist das Gebergehäuse 26 zu erkennen, in dem der Geber 18 angeordnet ist. Bei dem Geber kann es sich z. B. um einen Permanentmagneten handeln, aber auch jedes andere ein felderzeugendes System ist hier im Gebergehäuse 26 integrierbar. Weiterhin ist in Figur 5 ein Führungselement 20 erkennbar, das die Bewegung der Anschlagselemente 29 in Richtung der Kraftaufbereitung vom ersten Verbindungselement 13 über die Messfeder 16 zum zweiten Verbindungselement 21 hin führt.

Figur 6 zeigt die aus Figur 5 bekannte Gurtkraftmesseinrichtung 1 ergänzt um ein Sensorgehäuse 27, in dem das Sensorelement 17 angeordnet ist. Als Sensorelement 17 wird in der Regel ein Hallsensor oder magnetoresistiver Sensor eingesetzt, wobei jedes ein Geberfeld erfassende Sensorelement hier verwendbar ist.

Letztlich zeigt Figur 7 die aus Figur 6 bekannte Gurtkraftmesseinrichtung 1 mit ihrem ersten Verbindungselement 13 und ihrem zweiten Verbindungselement 21 sowie der ersten Faltung 24, wobei eine Umspritzung 23 aus thermoplastischen Material die Messfeder 16, das Gebergehäuse 26 und das Sensorgehäuse 27 umgibt. Diese Umspritzung 23 aus thermoplastischem Material schützt das Sensorelement 17 und den Geber 18 sowie die Messfeder 16 vor äußeren Einflüssen.

Die hier in den Figuren 3 bis 7 dargestellte Gurtkraftmesseinrichtung ist als Stanzblechteil äußerst kostengünstig herstellbar, sie liefert hervorragende Messergebnisse und ist darüber hinaus sehr robust und langlebig. Die Gurtkraftmesseinrichtung 1 nach den Figuren 3 bis 7 kann an den unterschiedlichsten Stellen des Kraftflusses innerhalb des Gurtes 2 eingesetzt werden. Beispiele hierfür sind in Figur 1 gezeigt, wo die Gurtkraftmesseinrichtung 1 einmal im Gurtschloss 28 integriert ist und zum anderen innerhalb des Gurtes 2 mit einem Gurtabschnitt 30 und einem zweiten Gurtabschnitt 31 verbunden ist.

## Patentansprüche

1. Gurtkraftmesseinrichtung (1) mit einer Messfeder (16), deren Auslenkung ein Maß für die Gurtkraft (F) ist, und mit einem Geber (18), der der Messfeder (16) zugeordnet ist, und mit einem Sensorelement (17), das ebenfalls der Messfeder (16) zugeordnet ist, wobei die Auslenkung der Messfeder(16) eine Veränderung der Lage des Sensorelementes (17) relativ zum Geber (18) bewirkt, die vom Sensorelement (17) als Maß für die Gurtkraft (F) erfasst wird und wobei die Gurtkraftmesseinrichtung (1) weiterhin ein erstes Verbindungselement (13) aufweist, das die Messfeder (16) mit einem Gurtschloss (28) oder einem ersten Gurtabschnitt (30) verbindet und ein zweites Verbindungselement (21), das die Messfeder (16) mit einer Fahrzeugkarosserie beziehungsweise einem Bauteil an der Fahrzeugkarosserie oder einem zweiten Gurtabschnitt (31) verbindet, wobei die Messfeder (16), das erste Verbindungselement (13) und das zweite Verbindungselement (21) als einstückiges Bauteil ausgebildet sind, **dadurch gekennzeichnet, dass** die Messfeder (16), das erste Verbindungselement (13) und das zweite Verbindungselement (21) einstückig als Stanzblechteil ausgebildet sind, wobei das Stanzblechteil mindestens eine erste Faltung (24) aufweist und mit der Faltung das Anschlagselement in eine Position vor dem Anschlag gebracht ist und wobei am Stanzblechteil durch eine zweite Faltung (25) ein Anschlag (14) ausgebildet ist, der beim Erreichen einer Maximalkraft die weitere Verschiebung der Verbindungselemente (13, 21) untereinander verhindert.

2. Gurtkraftmesseinrichtung (1) nach Anspruch 1, **dadurch gekennzeichnet, dass** das erste Verbindungselement (13) eine Lasche (22) aufweist.

3. Gurtkraftmesseinrichtung (1) nach einem der vorstehenden Ansprüche, **dadurch gekennzeichnet, dass** das zweite Verbindungselement (21) eine Lasche (22) aufweist.

4. Gurtkraftmesseinrichtung (1) nach einem der vorstehenden Ansprüche, **dadurch gekennzeichnet, dass** am Stanzblechteil durch eine nächste Faltung eine Führung (20) ausgebildet ist, die eine geführte Verschiebung der Verbindungselemente (13, 21) untereinander ermöglicht.

5. Gurtkraftmesseinrichtung (1) nach einem der vorstehenden Ansprüche, **dadurch gekennzeichnet, dass** das Stanzblechteil als Leadframe ausgebildet ist, auf dem das Sensorelement (17) und/oder eine Auswerteelektronik angeordnet sind.

6. Gurtkraftmesseinrichtung (1) nach einem der vorstehenden Ansprüche, **dadurch gekennzeichnet, dass** das Stanzblechteil mit dem darauf angeordneten Sensorelement (17), dem Geber (18) und/oder der Auswerteelektronik mit einer thermoplastischen Umspritzung (23) zum Schutz vor äußeren Einflüssen umgeben ist.

## Claims

1. Belt force measuring device (1) having a measuring spring (16) whose deflection is a measure of the belt force (F), and having a transmitter (18) which is associated with the measuring spring (16), and having a sensor element (17) which is likewise associated with the measuring spring (16), with the deflection of the measuring spring (16) effecting a change in the position of the sensor element (17) relative to the transmitter (18), said change being detected by the sensor element (17) as a measure of the belt force (F), and with the belt force measuring device (1) also having a first connection element (13), which connects the measuring spring (16) to a belt lock (28) or a first belt section (30), and a second connection element (21) which connects the measuring spring (16) to a vehicle body or a component on the vehicle body or a second belt section (31), with the measuring spring (16), the first connection element (13) and the second connection element (21) being formed as an integral component, **characterized in that** the measuring spring (16), the first connection element (13) and the second connection element (21) are integrally formed as a stamped sheet metal part, with the stamped sheet metal part having at least a first fold (24) and the fold being used to move the stop element into a position in front of the stop, and with a stop (14) being formed on the stamped sheet metal part by a second fold (25), said stop preventing the connection elements (13, 21) from moving further one beneath the other when a maximum force is reached.

2. Belt force measuring device (1) according to Claim 1, **characterized in that** the first connection element (13) has a lug (22).

3. Belt force measuring device (1) according to one of the preceding claims, **characterized in that** the second connection element (21) has a lug (22).

4. Belt force measuring device (1) according to one of the preceding claims, **characterized in that** a guide (20) is formed on the stamped sheet metal part by a next fold, said guide allowing the connection elements (13, 21) to move one beneath the other in a guided manner.

5. Belt force measuring device (1) according to one of the preceding claims, **characterized in that** the stamped sheet metal part is in the form of a leadframe on which the sensor element (17) and/or evaluation electronics are/is arranged.

6. Belt force measuring device (1) according to one of the preceding claims, **characterized in that** the stamped sheet metal part with the sensor element (17) which is arranged on it, the transmitter (18) and/or the evaluation electronics are/is surrounded by a thermoplastic encapsulation (23) in order to protect against external influences.

## Revendications

1. Dispositif (1) de mesure de la force d'une ceinture, comprenant un ressort (16) de mesure, dont l'allongement représente une mesure de la force (F) de la ceinture, et un transmetteur (18) qui est associé au ressort (16) de mesure et un élément (17) capteur qui est associé également au ressort (16) de mesure, l'allongement du ressort (16) de mesure provoquant une modification de la position de l'élément (17) capteur par rapport au transmetteur (18), modification qui est détectée par l'élément (17) capteur comme une mesure de la force (F) de la ceinture et dans lequel le dispositif (1) de mesure de la force d'une ceinture a en outre un premier élément (13) de liaison, qui relie le ressort (16) de mesure à une boucle (28) de la ceinture ou à un premier tronçon (30) de la ceinture et un deuxième élément (21) de liaison, qui relie le ressort (16) de mesure à une carrosserie du véhicule ou à un élément sur la carrosserie du véhicule ou à un deuxième tronçon (31) de la ceinture, le ressort (16) de mesure, le premier élément (13) de liaison et le deuxième élément (21) de liaison étant constitués en une seule pièce, **caractérisé en ce que** le ressort (16) de mesure, le premier élément (13) de liaison et le deuxième élément (21) de liaison sont constitués d'une seule pièce sous la forme d'une pièce de tôle estampée, la pièce de tôle estampée ayant au moins un premier pli (24) et par le pli l'élément de butée étant mis dans une position devant la butée et dans lequel il est formé sur la pièce en tôle estampée par un deuxième pli (25) une butée (14) qui, lorsqu'une force maximum est atteinte, empêche les éléments (13, 21) de liaison de continuer à se déplacer l'un par rapport à l'autre.

2. Dispositif (1) de mesure de la force d'une ceinture suivant la revendication 1, **caractérisé en ce que** le premier élément (13) de liaison a un collier (22).

3. Dispositif (1) de mesure de la force d'une ceinture suivant l'une des revendications précédentes, **caractérisé en ce que** le deuxième élément (21) de liaison a un collier (22).

4. Dispositif (1) de mesure de la force d'une ceinture suivant l'une des revendications précédentes, **caractérisé en ce qu'**il est formé sur la pièce de tôle estampée, par un pliage suivant, un guidage (20) qui permet d'avoir un déplacement guidé des éléments (13, 21) de liaison entre eux.

5. Dispositif (1) de mesure de la force d'une ceinture suivant l'une des revendications précédentes, **caractérisé en ce que** la pièce de tôle estampée est constituée en fond de panier, sur lequel sont montés l'élément (17) capteur et/ou une électronique d'exploitation.

6. Dispositif (1) de mesure de la force d'une ceinture suivant l'une des revendications précédentes, **caractérisé en ce que** la pièce de tôle estampée avec l'élément (17) capteur qui y est monté, le transmetteur (18) et/ou l'électronique d'exploitation est entouré d'un enrobage (23) thermoplastique d'extrusion pour la protection vis-à-vis des influences extérieures.
